# FASCICULE DE BREVET EUROPEEN

(11) **EP 4 129 604 B1**
(45) Date de publication et mention de la délivrance du brevet: **20.12.2023**
(21) Numéro de dépôt: 21189417.5
(22) Date de dépôt: 03.08.2021
(51) Int. Cl.: B29B 17/00, B29B 17/02, B29B 17/04, B29K 23/00, B29L 31/00

(54) **PROCÉDÉ DE BROYAGE ET DE RECYCLAGE DE BIG-BAGS USAGÉS ET INSTALLATION POUR LA MISE EN OEUVRE DU PROCÉDÉ**
VERFAHREN ZUM SCHREDDERN UND RECYCELN VON GEBRAUCHTEN BIG BAGS UND ANLAGE ZUR UMSETZUNG DIESES VERFAHRENS
METHOD FOR GRINDING AND FOR RECYCLING USED BIG-BAGS AND INSTALLATION FOR IMPLEMENTING THE METHOD

(43) Date de publication de la demande: 08.02.2023
(73) Titulaire: All Sun, 27660 Bezu-Saint-Eloi (FR); Techni-Terre, 27150 Etrepagny (FR)
(72) Inventeur: LETIERCE, Luc, 60590 ERAGNY SUR EPTE (FR); DURAND, Rémi, 27150 ETREPAGNY (FR); TOURNERIE, Jean-Pierre, 27480 FLEURY LA FORET (FR); GIRODET, Laurent, 76760 ST MARTIN AUX ARBRES (FR)
(74) Mandataire: Cabinet Bleger-Rhein-Poupon

(56) Documents cités:
- CN-U- 209 036 777
- CN-U- 210 140 731
- CN-U- 211 662 429
- JP-A- 2004 255 669
- JP-A- 2017 014 316

## Description

La présente invention concerne le domaine du recyclage, et plus particulièrement du recyclage de matières plastiques.

La présente invention concerne plus spécifiquement un procédé permettant le recyclage de produits plastiques fabriqués à partir de deux composants plastiques principaux, en assurant une séparation optimale de ces deux composants, ainsi qu'une installation permettant la mise en oeuvre du procédé de l'invention.

Le procédé de la présente invention est tout particulièrement indiqué pour le recyclage de grands sacs souples de type « big-bags », qui sont notamment utilisés dans le milieu agricole pour stocker et/ou transporter des graines ou des granulés.

Les big-bags, également connus sous la dénomination GRVS pour Grand Récipient pour Vrac Souple, sont des récipients se présentant sous forme de sacs constitués de deux éléments :
- une sache interne consistant en un film continu fabriqué en matière de polyéthylène (abrégé PE dans la suite de la desc), et présentant généralement un grammage compris entre 50 et 100 g/m² ;
- une enveloppe externe résistante en polypropylène (abrégé PP dans la suite de la description), présentant généralement un grammage compris entre 100 et 200 g/m².

Le poids d'un big-bag vide est de l'ordre de 1,3 kg, et son volume est généralement de 1m³, avec une proportion massique PP-PE de l'ordre de 2/3 de PP pour 1/3 de PE.

Ces deux éléments, sache interne et enveloppe externe, sont rendus solidaires par couture et/ou par collage. Les fils de couture sont également en un matériau plastique, type polypropylène, polyamide ou bien encore polyester.

Un big-bag est muni de sangles pour permettre sa manutention, par exemple au moyen d'un chariot élévateur.

Lors de l'utilisation de ce big-bag, par exemple pour le conditionnement de matières sensibles à l'humidité comme des granulés, le sac est maintenu en hauteur au-dessus d'un récipient puis est incisé dans le fond pour en extraire le contenant qui s'écoule.

Une fois les big-bags ainsi incisés et vidés, ou lorsque ceux-ci sont usagés, ils sont stockés à plat, en fagots, et pressés, devenant ainsi des déchets qu'il convient de traiter, et dans la mesure du possible, de recycler, cela pour des raisons environnementales évidentes.

Dans cette optique, il est essentiel de séparer efficacement les deux matières plastiques, PP et PE dont sont constituées respectivement l'enveloppe externe et le sachet interne du big-bag.

Une telle séparation des deux éléments, sache interne et enveloppe externe, constituant un big-bag, peut être effectuée manuellement par un opérateur.

Cela étant, une telle opération requiert inévitablement beaucoup de temps.

Les big-bags peuvent également être broyés dans leur totalité par des machines, en sorte que les deux matériaux plastiques constitutifs des sacs, polyéthylène et polypropylène, se retrouvent en mélange dans un broyat.

Le recyclage des big-bags est, par conséquent, problématique, car il est difficile de séparer efficacement le polypropylène provenant de l'enveloppe externe du polyéthylène qui compose la sache interne, une fois ces éléments broyés et mélangés. En effet, les technologies de broyage, actuellement mises en oeuvre, ne permettent pas de conduire à des morphologies différentes des composants qui sont broyés, en sorte que les tentatives de séparation ultérieures des matières de base, PP et PE, ne sont pas efficaces.

On connait ainsi, dans l'état de la technique, le brevet polonais PL 428008 qui a pour objectif de proposer une méthode de recyclage de sacs de type big-bags usagés fabriqués à base de polypropylène (PP) ou d'un mélange polypropylène/polyéthylène (PP/PE).

Dans cette méthode de recyclage, on met en oeuvre, de manière séquentielle, les étapes suivantes :
- pré-déchiquetage à sec des sacs afin d'obtenir des lambeaux de taille inférieure ou égale à 80mm ;
- lavage de ces lambeaux dans deux eaux, puis centrifugation et/ou pressage pour en éliminer l'excès d'eau ;
- second broyage afin d'obtenir des paillettes de taille inférieure ou égale à 60mm ;
- compactage puis fusion, mélange et extrusion mono-vis entre 240° et 260°C, en filtrant la masse fondue sur un tamis à mailles 0,6mm ;
- enfin dégazage, ré-extrusion, toujours en filtrant sur tamis, puis granulation.

Ainsi, on propose ici une solution de recyclage basée sur une séquence de broyages-lavages-fusion et enfin filtration, dans laquelle on cherche à obtenir un broyat à la fois homogène et débarrassé de ses impuretés.

La mise en oeuvre de cette méthode sur un sac fabriqué à partir d'un mélange PP/PE, dans laquelle on cherche à obtenir un broyat des matières plastiques présentant une granulométrie relativement homogène, ne permet pas une séparation desdites deux matières plastiques.

Le document de brevet européen EP 2 371 508 décrit une méthode pour recycler des emballages de produits laitiers, composés d'une feuille de polymère et d'un film de scellage.

Dans ce procédé, on broie les déchets avant une séparation mécanique de ces derniers, par précipitation cyclonique, visant à séparer les particules lourdes, comprenant majoritairement la feuille polymère, des particules légères.

Les particules légères sont ensuite passées au tamis pour séparer les particules de très petites dimensions qui sont issues du film de scellage.

On regroupe ensuite les particules lourdes de polymère avec les particules issues du refus de tamisage et on les fusionne avant une filtration du polymère fondu.

On connait également, du document de brevet CN 111546536, un procédé pour récupérer des sacs en plastique tissé, destiné à contenir des engrais ou produits chimiques, dans lequel on aplatit puis on presse les sacs, en cherchant à éviter la formation de plis qui pourraient bloquer les machines. On effectue ensuite un brossage puis un lavage des sacs, des deux côtés de ceux-ci.

Dans les documents de brevet CN 210 233 640 et CN 210 211 005 sont proposées des méthodes de broyage de sacs en plastique tissé composés d'une enveloppe en PP, et d'une sache interne en PE ; ces sacs sont utilisés pour conditionner des engrais ou des produits chimiques. Dans ces méthodes, les sacs sont broyés au moyen d'un broyeur à couteaux.

Dans le document CN 209 365 131, le découpage-broyage des sacs est effectué par une lame hélicoïdale et extracteur d'air, pour éviter un pré-découpage manuel des sacs et générer moins de poussières.

Le document CN 209 036 777 est relatif au recyclage et nettoyage de sacs en PP tissé, destinés à une utilisation dans l'industrie ou dans l'agriculture.

Le procédé décrit est séquentiel :
- premier déchiquetage des sacs,
- nettoyage à l'eau dans deux bassins,
- second déchiquetage,
- nouveau lavage
- séparation des matériaux par sédimentation et,
- déshydratation

Le document JP 2017 014 316 décrit une méthode de production d'une résine composite recyclée à partir d'un contenant flexible formé d'un sac externe principalement en polypropylène et d'un sac interne majoritairement en polyéthylène. Ce contenant est dans un premier temps broyé avant que le broyat soit transféré dans un extrudeur multi-étage pour une fusion, un mélange et une filtration à travers un tamis afin de produire une matière première recyclée. Un chauffage est nécessaire pour une élimination des fibres de PET.

Cependant, et comme déjà indiqué précédemment, les méthodes proposées dans l'état de la technique sont parfois complexes et coûteuses à mettre en oeuvre, et/ou ne permettent pas une séparation optimale des différents constituants des sacs fabriqués à partir de différents polymères en vue de leur recyclage.

Par conséquent, il est fréquent que, après broyage, les matières plastiques de base des big-bags, PP et PE, ne soient pas correctement séparées et soient fondues ensemble en vue d'être transformées en granulés réutilisables.

Il en résulte un matériau final, certes recyclé, mais présentant des performances physiques médiocres, du fait de l'incompatibilité chimique entre le PP et le PE.

Ainsi, certains produits recyclés actuellement disponibles sur le marché, et fabriqués à partir de granulés dont la composition comporte inévitablement un mélange de ces deux matériaux plastiques, présentent des caractéristiques mécaniques inférieures à celles d'un produit, en l'occurrence un big-bag, dont les composants, sache interne et enveloppe externe, sont fabriquées respectivement à partir de PE et de PP purs ou quasiment purs.

La présente invention se veut à même de remédier, au moins en partie, aux inconvénients des procédés connus dans l'état de la technique pour le broyage et la séparation des matériaux plastiques qui composent les deux éléments d'un big-bag.

La solution imaginée par les inventeurs consiste à combiner une technologie spécifique de broyage des sacs de type big-bags avec une séparation des deux matières plastiques qui les composent, basée sur une différence de morphologie de ces matières obtenue suite au broyage spécifique.

Ainsi, la présente invention a pour objet, dans un premier temps, un procédé de broyage et de recyclage de big-bags usagés constitués d'une sache interne continue en polyéthylène et d'une enveloppe externe tissée en polypropylène.

Le procédé de l'invention est particulier en ce qu'il comporte, au moins, les étapes suivantes, prises dans l'ordre :
- On compacte au moins un big-bag à une épaisseur inférieure à 20 cm ;
- On achemine ledit au moins un big-bag compacté au niveau d'une unité de broyage;
- On effectue un broyage dudit au moins un big-bag compacté au niveau d'une unité de broyage, la vitesse d'amenée dudit big-bag compacté au niveau de l'unité de broyage et la fréquence de coupe de cette dernière étant telles que l'on applique entre 100 et 1000 coupes/m de big-bag(s) compacté(s), en sorte d'obtenir, d'une part, des bandelettes de polyéthylène provenant de la sache interne, de largeur comprise entre 1 et 10 mm et de longueur jusqu'à 1000 mm, et, d'autre part, des fragments de l'enveloppe externe en polypropylène se présentant sous forme de morceaux partiellement détissés et de filaments de largeur de 1 à 2 mm et de longueur jusqu'à 500 mm ;
- On sépare lesdites bandelettes de polyéthylène des fragments de polypropylène par secouage et on obtient une première fraction de fragments de polypropylène et une deuxième fraction de bandelettes de polyéthylène, cette dernière étant traitée en effectuant un second broyage des bandelettes de polyéthylène ;
- On nettoie lesdites deux fractions en effectuant, sur chacune des fractions, au moins :
   ∘ une séparation aéraulique ;
   ∘ un dépoussiérage ;
   ∘ un lavage à l'eau ;
- On alimente une première extrudeuse avec ladite première fraction nettoyée de fragments de polypropylène pour obtenir des granulés de polypropylène et une deuxième extrudeuse avec ladite deuxième fraction nettoyée de bandelettes de polyéthylène broyées pour obtenir des granulés de polyéthylène.

Selon des modes particuliers de réalisation du procédé de l'invention :
- on applique entre 200 et 500 coupes/m de big-bag compacté ;
- dans une première variante de réalisation du procédé, on achemine ledit au moins un big-bag compacté au niveau de l'unité de broyage au moyen d'un tapis transporteur, à une vitesse d'amenée comprise entre 14,4 m/min et 144 m/min, et ladite unité de broyage au niveau de laquelle on effectue le broyage consiste en un rotor multicouteaux dont la fréquence de coupe est égale à 240 coupes par seconde ;
- préférentiellement, dans cette première variante, on achemine ledit au moins un big-bag compacté au niveau de l'unité de broyage à une vitesse d'amenée comprise entre 28,8 et 72 m/min ;
- dans une deuxième variante de réalisation du procédé, on achemine ledit au moins un big-bag compacté au niveau de l'unité de broyage au moyen d'un tapis transporteur, à une vitesse d'amenée comprise entre 0,25 m/min et 2,5 m/min, et ladite unité de broyage au niveau de laquelle on effectue le broyage consiste en une coupeuse guillotine dont la fréquence de coupe est égale à 250 coupes par minute.
- on achemine ledit au moins un big-bag compacté au niveau de l'unité de broyage à une vitesse d'amenée comprise entre 0,5 et 1,25 m/min ;
- on compacte ledit au moins un big-bag à une épaisseur comprise entre 3 et 5 cm ;
- lors de l'étape de nettoyage desdites deux fractions, on effectue :
   * sur chacune desdites deux fractions, une première séparation aéraulique apte à permettre l'extraction des contaminants les plus lourds, notamment le métal, le bois, le papier, les particules minérales ;
   * sur la deuxième fraction contenant les bandelettes de PE, une deuxième séparation aéraulique apte à permettre l'élimination du PP et d'abaisser la proportion dudit PP au sein de ladite deuxième fraction à une teneur inférieure à 1%.

La présente invention concerne également une installation de broyage et de recyclage de big-bags usagés, constitués d'une sache interne continue en polyéthylène et d'une enveloppe externe tissée en polypropylène, pour la mise en oeuvre du procédé de l'invention.

Elle comporte une unité de compactage d'au moins un big-bag en aval de laquelle est disposé un tapis d'amenée alimentant, en big-bag(s) compacté(s), une unité de broyage comportant des moyens de coupe dudit au moins un big-bag en un broyat brut composé de bandelettes de polyéthylène d'une part, et de particules fragmentées de polypropylène d'autre part.

Ladite installation comporte en outre des moyens d'alimentation d'une chargeuse en broyat brut comportant des moyens de calibration et de gestion du débit d'entrée dudit broyat dans une unité de séparation comportant au moins un secoueur apte à séparer une première fraction de fragments de polypropylène d'une deuxième fraction de bandelettes de polyéthylène.

L'installation est également munie de premiers moyens d'acheminement de ladite deuxième fraction depuis le secoueur vers une seconde unité de broyage, de deuxièmes moyens d'acheminement de ladite deuxième fraction broyée depuis ladite seconde unité de broyage vers une unité de séparation et de nettoyage et de quatrièmes moyens d'acheminement de ladite première fraction de fragments directement depuis ledit secoueur vers ladite unité de séparation et de nettoyage. En aval de cette unité sont placés des premiers moyens d'extrusion alimentés avec ladite première fraction nettoyée de fragments de polypropylène et des seconds moyens d'extrusion alimentés avec ladite deuxième fraction nettoyée de bandelettes de polyéthylène broyées.

Dans des exemples de réalisation de l'installation :
- ledit secoueur comporte, dans sa partie inférieure, un tablier composé d'une pluralité de grilles ou de barres parallèles fixes, deux grilles ou deux barres adjacentes étant séparées d'une distance comprise entre 1 et 3 cm, ledit secoueur comportant en outre, dans sa partie supérieure, une succession d'une pluralité de tiges articulées contenant des pointes, lesquelles tiges sont animées d'un mouvement de rotation alternatif et saccadé de 20 à 90° ;
- les moyens de coupe de l'unité de broyage consistent en un rotor multicouteaux ;
- les moyens de coupe de l'unité de broyage consistent en une coupeuse guillotine.

D'autres buts et avantages de la présente invention apparaîtront au cours de la description qui va suivre se rapportant à des modes de réalisation qui ne sont donnés qu'à titre d'exemples indicatifs.

La présente invention a pour objet, plus particulièrement, dans un premier temps, un procédé de broyage et de recyclage de big-bags usagés.

L'invention décrite ici est également relative à une installation pour la mise en oeuvre du procédé de l'invention. Celle-ci sera décrite ultérieurement dans la description.

Les big-bags qui sont destinés à être traités au moyen du procédé de l'invention consistent en des récipients sous forme de sacs de grande taille, qui sont constitués de deux éléments obtenus à partir de deux matériaux plastiques distincts. Ainsi, un big-bag comporte classiquement, d'une part, une sache interne continue en polyéthylène (PE) et, d'autre part, une enveloppe externe tissée en polypropylène (PP).

Le procédé de la présente invention, lorsqu'il est mis en oeuvre sur des big-bags usagés traditionnellement utilisés dans le domaine agricole, permet, de manière particulièrement intéressante, de produire des fragments différenciés de chacune des matières plastiques, PE et PP, qui constituent le produit de base.

Ainsi, chacune des deux matières plastiques PE et PP peuvent aisément être recyclées séparément l'une de l'autre, et sans que l'une soit contaminée avec l'autre et inversement.

L'invention concerne plus spécifiquement un procédé de broyage et de recyclage de big-bags usagés dont la composition a été décrite précédemment.

Dans une première étape du procédé, le ou les big-bag(s) qui doivent être traités sont compactés, en sorte de former un lit d'une épaisseur inférieure à 20 cm comportant la matière à traiter, et plus préférentiellement une épaisseur comprise entre 3 et 5 cm.

Le ou les big-bag(s) ainsi compactés alimentent, dans une deuxième étape, et au travers de moyens de transports adaptés, notamment un tapis de transport, une unité de broyage.

Dans une étape ultérieure du procédé objet de l'invention, on effectue un broyage du ou des big-bag(s) compacté(s).

Selon une caractéristique particulière au procédé de broyage et de recyclage de big-bags de l'invention, les moyens de transports du ou des big-bag(s) compacté(s) depuis l'unité de compactage jusqu'à l'unité de broyage, de même que la fréquence de coupe de cette dernière, sont réglés de telle sorte que l'on applique, au moment du broyage, un nombre de coupes compris entre 100 et 1000, de préférence entre 200 et 500 coupes, par mètre de big-bag(s) compacté(s) qui arrive au moyen du tapis de transport au niveau de l'unité de broyage.

En d'autres termes, la fréquence de coupe des moyens de coupe de l'unité de broyage d'une part, et la vitesse d'amenée des big-bags compactés d'autre part sont paramétrées et corrélées dans l'optique d'arriver à un tel nombre de coupes (entre 100 et 1000 et de préférence entre 200 et 500) par unité de longueur (1m) de big-bags compactés arrivant au niveau de l'unité de broyage au moyen du tapis de transport.

Il a pu être mis en évidence, par les inventeurs, que de telles valeurs de nombre de coupes appliquées à une unité de longueur de big-bags compactés, permet, de manière particulièrement avantageuse, d'obtenir deux broyat mêlés : d'une part des bandelettes ou des longs rubans en PE, d'une largeur comprise entre 1 et 10 mm, de préférence de 2 à 5 mm, et d'une longueur allant jusqu'à 1000 mm, provenant du film continu de fibres constituant la sache interne du big-bag, et, d'autre part, des fragments de PP provenant de l'enveloppe externe dudit big-bag, de taille très majoritairement inférieure à celles des bandelettes de PE. En effet, en ce qui concerne ces fragments de PP, ils se présentent sous forme de morceaux partiellement détissés de quelques centimètres carrés, et de filaments seuls de largeur de 1 à 2 mm et de longueur jusqu'à 500 mm.

Ainsi, la mise en oeuvre du paramètre susmentionné dans le procédé de broyage et de recyclage de big-bags de l'invention, à savoir un nombre de coupes particulièrement élevé par unité de longueur de produit à broyer, obtenu en réglant concomitamment la vitesse d'amenée des big-bags compactés et la fréquence de coupe des moyens de coupe que comporte l'unité de broyage, aboutit à l'obtention de deux morphologies différenciées de fragments de PP et de PE.

Ces fragments, de morphologies différenciées, peuvent être plus aisément séparés dans des étapes ultérieures qui seront détaillées dans la suite de la présente description, en comparaison avec des fragments de PP et de PE présentant des tailles et/ou des formes sensiblement homogènes qui sont obtenus par la mise en oeuvre des procédés de broyage classiques et connus de l'état de la technique.

Dans un premier exemple de réalisation du procédé de l'invention, qui est particulièrement préféré, pour aboutir au nombre de coupes susmentionné et ainsi obtenir des fragments différenciés de PP/PE, on achemine, de manière régulière, au moins un big-bag compacté, de préférence plusieurs big-bags compactés, au niveau de l'unité de broyage au moyen d'un tapis transporteur, ce dernier fonctionnant à une vitesse d'amenée comprise entre 14,4 m/min et 144 m/min.

En parallèle à la vitesse régulière d'avancement du tapis, ladite unité au niveau de laquelle on effectue le broyage consiste en un rotor multicouteaux dont la fréquence de coupe est particulièrement élevée et égale à 240 coupes par seconde.

Dans ce premier exemple de réalisation, toujours avec un broyeur à multicouteaux fonctionnant à une fréquence de 240 coupes/seconde, et de manière particulièrement avantageuse, on achemine le ou les big-bag(s) compacté(s) au niveau de l'unité de broyage à une vitesse d'amenée comprise entre 28,8 et 72 m/min.

Préférentiellement, les big-bags sont amenés sous forme compactée pour être coupés au niveau de l'unité de broyage avec une épaisseur de compactage inférieure à 20 cm, préférentiellement comprise entre 3 et 5 cm.

En général, la largeur d'entrée dans le rotor multicouteaux de l'unité de broyage est de l'ordre de 800 mm, et la largeur utile est de l'ordre de 600 mm.

La densité compactée des big-bags est estimée à une valeur de l'ordre de 0,3.

La mise en oeuvre du procédé de l'invention avec de tels paramètres de vitesse d'amenée et de fréquence de coupe conduit à un débit de traitement de big-bags estimé à environ 38,9 tonnes/heure.

Dans un deuxième exemple de réalisation du procédé de l'invention, permettant également d'aboutir à des fragments de PP et de PE présentant des morphologies distinctes et aisément dissociables les uns des autres, on achemine ledit au moins un big-bag compacté, de manière régulière, au niveau de l'unité de broyage au moyen d'un tapis transporteur, à une vitesse d'amenée comprise cette fois ci entre 0,25 m/min et 2,5 m/min.

Dans ce deuxième exemple, les moyens de coupe, que comporte ladite unité de broyage au niveau de laquelle on effectue le broyage des big-bags, consistent en une coupeuse guillotine dont la fréquence de coupe est égale à 250 coupes par minute, afin d'aboutir à un nombre de coupes entre 100 et 1000 par mètre de big-bags compactés arrivant à l'unité de broyage.

Avantageusement, on achemine ledit au moins un big-bag compacté au niveau de l'unité de broyage à une vitesse d'amenée comprise entre 0,5 et 1,25 m/min pour obtenir un nombre de coupes entre 200 et 500 par mètre de big-bags compactés arrivant à l'unité de broyage.

A l'issue de l'étape de broyage spécifique au procédé de l'invention, et quel que soit le mode de réalisation retenu parmi ceux évoqués, de manière non limitative, ci-dessus, on obtient un broyat composé d'un amas de deux morphologies radicalement différentes : d'une part des bandelettes de PE provenant de la sache interne des big-bags et, d'autre part, des fragments de PP provenant de l'enveloppe externe.

A partir de ce broyat, dans une étape ultérieure du procédé de l'invention, on sépare lesdites bandelettes de PE des fragments de PP.

La séparation de ces deux types d'éléments de morphologies différentes peut être effectuée par tous moyens adaptés à cet effet.

Tout préférentiellement, on appliquera un procédé de séparation au moyen d'une unité appelée « secoueur » qui sera décrit plus en détails ci-après en relation avec l'installation permettant le broyage et le recyclage de big-bags usagés conforme à l'invention.

A l'issue de cette étape de séparation, on obtient, d'un côté, une première fraction de fragments de polypropylène et, d'un autre côté, une deuxième fraction de bandelettes de polyéthylène.

Tout particulièrement, il a pu être mis en évidence, par les inventeurs, que le taux de contamination, par du PE, dans la première fraction est inférieur à 10%, tandis que, dans la deuxième fraction de bandelettes de PE, le taux de contamination par des fragments de PP est inférieur à 2%.

Dans une étape ultérieure du procédé, qui concerne uniquement ladite deuxième fraction, on broie les bandelettes de PE au moyen, préférentiellement, d'un broyeur à couteaux, afin de réduire leur taille.

Ensuite, les deux fractions subissent un traitement similaire de nettoyage, chacune indépendamment l'une de l'autre.

Plus particulièrement, on nettoie chacune desdites deux fractions en effectuant, au moins les sous-étapes suivantes :
- une première séparation aéraulique ; une telle sous étape dans le processus de nettoyage permet, dans un premier temps, d'extraire les contaminants les plus lourds qui pourraient se trouver dans chacune des deux fractions, notamment le métal, le bois, le papier, les particules et salissures minérales, etc. ;
- de manière optionnelle, une deuxième séparation aéraulique peut être effectuée, uniquement sur la deuxième fraction contenant les bandelettes de PE ; on élimine au moyen de cette deuxième séparation, de manière efficace, les contaminants légers de PP, et on abaisse leur proportion, au sein de ladite deuxième fraction, à une teneur qui est inférieure à 1% ;
- on effectue ensuite un dépoussiérage par la mise en oeuvre d'un tamis vibrant ou d'un crible à nutation ou bien encore d'un séparateur cyclone ;
- un lavage à l'eau de chacune des fractions.

Suivant le nettoyage de chacune desdites deux fractions :
- on alimente une première extrudeuse avec ladite première fraction nettoyée comprenant les fragments de PP, en sorte d'obtenir des granulés de PP, et ;
- on alimente une deuxième extrudeuse avec ladite deuxième fraction nettoyée avec les bandelettes de PE broyées, en sorte d'obtenir des granulés de PE.

Le nettoyage, de même que l'extrusion et la granulation de chaque matériau, sont effectués au moyen de procédés connus par l'homme de l'art, en appliquant des paramètres déjà usités dans l'état de la technique.

La mise en oeuvre du procédé de broyage et de recyclage de big-bags usagés conforme à l'invention permet donc, de manière particulièrement intéressante, une production de granulés de PP et de granulés de PE présentant des caractéristiques conformes pour un réemploi industriel de ces matières.

La présente invention est également relative à une installation permettant le broyage et le recyclage de big-bags usagés.

L'installation est plus spécifiquement apte à permettre la mise en oeuvre du procédé de l'invention tel que décrit ci-dessus.

Ladite installation comporte, au moins, les éléments détaillés ci-dessous :
- une unité de compactage d'au moins un big-bag ;
- en aval de cette unité de compactage est disposé un tapis d'amenée alimentant, en big-bag(s) compacté(s), de manière régulière, une unité de broyage dudit au moins un big-bag au travers de moyens de coupe ; au niveau de cette unité de broyage est produit, par lesdits moyens de coupe, un broyat brut composé de bandelettes de polyéthylène d'une part, et de fragments de polypropylène d'autre part,
- des moyens d'alimentation d'une chargeuse avec ledit broyat brut qui sort de l'unité de broyage ; ladite chargeuse comporte des moyens de calibration et de gestion du débit d'entrée dudit broyat dans une unité de séparation positionnée en aval ;
- une unité de séparation consistant, de manière particulière à l'installation de l'invention, en un secoueur apte à séparer une première fraction de fragments de polypropylène d'une deuxième fraction de bandelettes de polyéthylène ;
- des premiers moyens d'acheminement de ladite deuxième fraction depuis le secoueur vers une seconde unité de broyage ;
- des deuxièmes moyens d'acheminement de ladite deuxième fraction broyée depuis ladite seconde unité de broyage vers une unité de séparation et de nettoyage ;
- des quatrièmes moyens d'acheminement de ladite première fraction de fragments directement depuis ledit secoueur vers ladite unité de séparation et de nettoyage, considérant que les deux fractions sont traitées de manière séparée au niveau de cette unité ;
- en aval de ladite unité de séparation et de nettoyage, des premiers moyens d'extrusion alimentés avec ladite première fraction nettoyée contenant les fragments de PP et,
- toujours en aval de l'unité de séparation et de nettoyage, des seconds moyens d'extrusion alimentés avec ladite deuxième fraction nettoyée et contenant les bandelettes de PE broyées.

A noter que, de manière avantageuse, chacune des extrudeuses est munie des équipements habituels de dégazage et de filtration afin de fondre les matières plastiques, PE et PP, et de les transformer en granulés réutilisables.

Pour en revenir à présent au secoueur que comporte l'installation de la présente invention, celui-ci est muni, tout préférentiellement, dans sa partie inférieure, d'un tablier composé d'une pluralité de grilles ou de barres parallèles fixes. Deux grilles ou deux barres adjacentes sont avantageusement séparées l'une de l'autre d'une distance comprise entre 1 et 3 cm.

Ledit secoueur comporte, en outre, dans sa partie supérieure, une succession d'une pluralité de tiges articulées contenant des pointes, lesquelles tiges sont animées d'un mouvement de rotation alternatif et saccadé de 20 à 90°.

Cet ensemble secoueur fonctionne de façon à projeter les amas de matières plastiques issues du broyage d'une tige à l'autre, de façon à les démêler, et à secouer suffisamment ces amas de plastique pour en extraire les particules fragmentées de PP, provenant de l'enveloppe externe, qui sont alors évacuées au travers de l'ensemble de tiges inférieures et récupérées par un tapis transporteur.

Les bandelettes de PE provenant de la sache interne sont, quant à elle, évacuées en extrémité de l'ensemble secoueur.

A l'issue de cette séparation par le secoueur, sont, par conséquent, obtenues deux fractions, dont les compositions ont déjà été mentionnées précédemment :
- des fragments de PP, dont le taux de contamination au PE est inférieur à 10% ;
- des bandelettes de polyéthylène dont le taux de contamination par des fragments de PP est inférieur à 2%.

Les moyens de coupe que comporte l'unité de broyage consistent, dans un premier mode de réalisation de l'installation conforme à l'invention, en un rotor multicouteaux.

Dans un deuxième mode de réalisation de l'installation conforme à l'invention les moyens de coupe consistent en une coupeuse guillotine.

Les caractéristiques qui ont été décrites en lien avec le procédé de broyage et de recyclage de big-bags usagés sont transposables à l'installation et inversement.

## Revendications

1. Procédé de broyage et de recyclage de big-bags usagés constitués d'une sache interne continue en polyéthylène et d'une enveloppe externe tissée en polypropylène, comportant, au moins,
les étapes suivantes, prises dans l'ordre :
- On compacte au moins un big-bag à une épaisseur inférieure à 20 cm ;
- On achemine ledit au moins un big-bag compacté au niveau d'une unité de broyage et
- On effectue un broyage dudit au moins un big-bag compacté au niveau d'une unité de broyage, la vitesse d'amenée dudit big-bag compacté au niveau de l'unité de broyage et la fréquence de coupe de cette dernière étant telles que l'on applique entre 100 et 1000 coupes/m de big-bag(s) compacté(s), en sorte d'obtenir, d'une part, des bandelettes de polyéthylène provenant de la sache interne, de largeur comprise entre 1 et 10 mm et de longueur jusqu'à 1000 mm, et, d'autre part, des fragments de l'enveloppe externe en polypropylène se présentant sous forme de morceaux partiellement détissés et de filaments de largeur de 1 à 2 mm et de longueur jusqu'à 500 mm ;
- On sépare lesdites bandelettes de polyéthylène des fragments de polypropylène par secouage et on obtient une première fraction de fragments de polypropylène et une deuxième fraction de bandelettes de polyéthylène, cette dernière étant traitée en effectuant un second broyage des bandelettes de polyéthylène ;
- On nettoie lesdites deux fractions en effectuant, sur chacune des fractions :
∘ au moins une séparation aéraulique ;
∘ un dépoussiérage ;
∘ un lavage à l'eau ;
- On alimente une première extrudeuse avec ladite première fraction nettoyée de fragments de polypropylène pour obtenir des granulés de polypropylène et une deuxième extrudeuse avec ladite deuxième fraction nettoyée de bandelettes de polyéthylène broyées pour obtenir des granulés de polyéthylène.

2. Procédé de broyage et de recyclage de big-bags usagés selon la revendication 1 **caractérisé en ce que** l'on applique entre 200 et 500 coupes/m de big-bag compacté.

3. Procédé de broyage et de recyclage de big-bags usagés selon la revendication 1 **caractérisé en ce que** l'on achemine ledit au moins un big-bag compacté au niveau de l'unité de broyage au moyen d'un tapis transporteur, à une vitesse d'amenée comprise entre 14,4 m/min et 144 m/min, et **en ce que** ladite unité de broyage au niveau de laquelle on effectue le broyage consiste en un rotor multicouteaux dont la fréquence de coupe est égale à 240 coupes par seconde.

4. Procédé de broyage et de recyclage de big-bags usagés selon la revendication 3 **caractérisé en ce que** l'on achemine ledit au moins un big-bag compacté au niveau de l'unité de broyage à une vitesse d'amenée comprise entre 28,8 et 72 m/min.

5. Procédé de broyage et de recyclage de big-bags usagés selon la revendication 1 **caractérisé en ce que** l'on achemine ledit au moins un big-bag compacté au niveau de l'unité de broyage au moyen d'un tapis transporteur, à une vitesse d'amenée comprise entre 0,25 m/min et 2,5 m/min, et **en ce que** ladite unité de broyage au niveau de laquelle on effectue le broyage consiste en une coupeuse guillotine dont la fréquence de coupe est égale à 250 coupes par minute.

6. Procédé de broyage et de recyclage de big-bags usagés selon la revendication 5 **caractérisé en ce que** l'on achemine ledit au moins un big-bag compacté au niveau de l'unité de broyage à une vitesse d'amenée comprise entre 0,5 et 1,25 m/min.

7. Procédé de recyclage de big-bags usagés selon l'une quelconque des revendications 1 à 6 **caractérisé en ce que** l'on compacte ledit au moins un big-bag à une épaisseur comprise entre 3 et 5 cm.

8. Procédé de recyclage de big-bags usagés selon l'une quelconque des revendications 1 à 7 **caractérisé en ce que**, lors de l'étape de nettoyage desdites deux fractions, on effectue :
- sur chacune desdites deux fractions, une première séparation aéraulique apte à permettre l'extraction des contaminants les plus lourds, notamment le métal, le bois, le papier, les particules minérales ;
- sur la deuxième fraction contenant les bandelettes de PE, une deuxième séparation aéraulique apte à permettre l'élimination du PP et d'abaisser la proportion dudit PP au sein de ladite deuxième fraction à une teneur inférieure à 1%.

9. Installation de broyage et de recyclage de big-bags usagés, constitués d'une sache interne continue en polyéthylène et d'une enveloppe externe tissée en polypropylène, pour la mise en oeuvre du procédé selon l'une quelconque des revendications 1 à 8, ladite installation comportant une unité de compactage d'au moins un big-bag en aval de laquelle est disposé un tapis d'amenée alimentant, en big-bag(s) compacté(s), une unité de broyage comportant des moyens de coupe dudit au moins un big-bag en un broyat brut composé de bandelettes de polyéthylène d'une part, et de fragments de polypropylène d'autre part, ladite installation comportant en outre des moyens d'alimentation d'une chargeuse en broyat brut comportant des moyens de calibration et de gestion du débit d'entrée dudit broyat dans une unité de séparation comportant au moins un secoueur apte à séparer une première fraction de fragments de polypropylène d'une deuxième fraction de bandelettes de polyéthylène, des premiers moyens d'acheminement de ladite deuxième fraction depuis le secoueur vers une seconde unité de broyage, des deuxièmes moyens d'acheminement de ladite deuxième fraction broyée depuis ladite seconde unité de broyage vers une unité de séparation et de nettoyage et des quatrièmes moyens d'acheminement de ladite première fraction de fragments directement depuis ledit secoueur vers ladite unité de séparation et de nettoyage, en aval de laquelle sont placés des premiers moyens d'extrusion alimentés avec ladite première fraction nettoyée de fragments de polypropylène et des seconds moyens d'extrusion alimentés avec ladite deuxième fraction nettoyée de bandelettes de polyéthylène broyées.

10. Installation de broyage et de recyclage de big-bags usagés selon la revendication 9 **caractérisée en ce que** ledit secoueur comporte, dans sa partie inférieure, un tablier composé d'une pluralité de grilles ou de barres parallèles fixes, deux grilles ou deux barres adjacentes étant séparées d'une distance comprise entre 1 et 3 cm, ledit secoueur comportant en outre, dans sa partie supérieure, une succession d'une pluralité de tiges articulées contenant des pointes, lesquelles tiges sont animées d'un mouvement de rotation alternatif et saccadé de 20 à 90°.

11. Installation de broyage et de recyclage de big-bags usagés selon la revendication 9 ou la revendication 10 **caractérisée en ce que** les moyens de coupe de l'unité de broyage consistent en un rotor multicouteaux.

12. Installation de broyage et de recyclage de big-bags usagés selon la revendication 9 ou la revendication 10 **caractérisée en ce que** les moyens de coupe de l'unité de broyage consistent en une coupeuse guillotine.

## Patentansprüche

1. Verfahren zum Zerkleinern und Recyceln von gebrauchten Big-Bags, die aus einem durchgehenden inneren Polyethylenbeutel und einer gewebten äußeren Polypropylenhülle bestehen, umfassend mindestens die folgenden Schritte in der getroffenen Reihenfolge:
- Verdichten von mindestens einem Big-Bag auf eine Dicke von weniger als 20 cm;
- Befördern des mindestens einen verdichteten Big-Bags zu der Ebene einer Zerkleinerungseinheit, und
- Ausführen eines Zerkleinerns des mindestens einen verdichteten Big-Bags auf einer Ebene einer Zerkleinerungseinheit, wobei die Zuführungsgeschwindigkeit des verdichteten Big-Bags auf der Ebene der Zerkleinerungseinheit und die Schnittfrequenz der letzteren so sind, wie sie für zu zwischen 100 und 1000 Schnitte/m verdichtete(r) Big-Bag(s) angewendet werden, so dass einerseits Polyethylenstreifen, die aus dem inneren Beutel stammen, mit einer Breite, die zwischen 1 bis 10 mm liegt, und einer Länge von bis zu 1000 mm erhalten werden, und andererseits Fragmente der äußeren Polypropylenhülle in Form von teilentzwirnten Stücken und Filamenten mit einer Breite von 1 bis 2 mm und einer Länge von bis zu 500 mm erscheinen;
- Trennen der Polyethylenstreifen von den Polypropylenfragmenten durch Rütteln und Erhalten eines ersten Anteils von Polypropylenfragmenten und eines zweiten Anteils von Polyethylenstreifen, wobei letztere durch Ausführen eines zweiten Zerkleinerns der Polyethylenstreifen verarbeitet werden;
- Reinigen der zwei Anteile durch Ausführen, an jedem der Anteile, von:
o mindestens einer lufttechnischen Trennung;
o einer Entstaubung;
o eines Waschens mit Wasser;
- Speisen eines ersten Extruders mit dem ersten gereinigten Anteil von Polypropylenfragmenten zum Erhalten von Polypropylengranulat, und eines zweiten Extruders mit dem zweiten gereinigten Anteil von zerkleinerten Polyethylenstreifen zum Erhalten von Polyethylengranulat.

2. Verfahren zum Zerkleinern und Recyceln von gebrauchten Big-Bags nach Anspruch 1, **dadurch gekennzeichnet, dass** zu zwischen 200 und 500 Schnitte/m verdichteter Big-Bag angewendet wird.

3. Verfahren zum Zerkleinern und Recyceln von gebrauchten Big-Bags nach Anspruch 1, **dadurch gekennzeichnet, dass** der mindestens eine verdichtete Big-Bag auf der Ebene der Zerkleinerungseinheit mittels eines Förderbands mit einer Zuführungsgeschwindigkeit, die zwischen 14,4 m/min und 144 m/min liegt, befördert wird, und dass die Zerkleinerungseinheit, auf deren Ebene das Zerkleinern ausgeführt wird, aus einem Rotor mit mehreren Messern besteht, dessen Schnittfrequenz gleich 240 Schnitte pro Sekunde ist.

4. Verfahren zum Zerkleinern und Recyceln von gebrauchten Big-Bags nach Anspruch 3, **dadurch gekennzeichnet, dass** der mindestens eine verdichtete Big-Bag auf der Ebene der Zerkleinerungseinheit mit einer Zuführungsgeschwindigkeit, die zwischen 28,8 und 72 m/min liegt, befördert wird.

5. Verfahren zum Zerkleinern und Recyceln von gebrauchten Big-Bags nach Anspruch 1, **dadurch gekennzeichnet, dass** der mindestens eine verdichtete Big-Bag auf der Ebene der Zerkleinerungseinheit mittels eines Förderbands mit einer Zuführungsgeschwindigkeit, die zwischen 0,25 m/min und 2,5 m/min liegt, befördert wird, und dass die Zerkleinerungseinheit, auf deren Ebene das Zerkleinern ausgeführt wird, aus einem Guillotinenschneider besteht, dessen Schnittfrequenz gleich 250 Schnitte pro Minute ist.

6. Verfahren zum Zerkleinern und Recyceln von gebrauchten Big-Bags nach Anspruch 5, **dadurch gekennzeichnet, dass** der mindestens eine verdichtete Big-Bag auf der Ebene der Zerkleinerungseinheit mit einer Zuführungsgeschwindigkeit, die zwischen 0,5 und 1,25 m/min liegt, befördert wird.

7. Verfahren zum Recyceln von gebrauchten Big-Bags nach einem der Ansprüche 1 bis 6, **dadurch gekennzeichnet, dass** der mindestens eine Big-Bag auf eine Dicke, die zwischen 3 und 5 cm liegt, verdichtet wird.

8. Verfahren zum Recyceln von gebrauchten Big-Bags nach einem der Ansprüche 1 bis 7, **dadurch gekennzeichnet, dass** bei dem Reinigungsschritt der zwei Anteile Folgendes ausgeführt wird:
- an jedem der zwei Anteile, eine erste lufttechnische Trennung, die geeignet ist, die Extraktion der schwersten Verunreinigungen zu ermöglichen, insbesondere von Metall, Holz, Papier, mineralischen Partikeln;
- an dem zweiten Anteil, der die PE-Streifen enthält, eine zweite lufttechnische Trennung, die geeignet ist, das Entfernen von PP zu ermöglichen, und die Menge des PP innerhalb des zweiten Anteils auf einen Gehalt von weniger als 1 % zu senken.

9. Anlage zum Zerkleinern und Recyceln von gebrauchten Big-Bags, die aus einem durchgehenden inneren Polyethylenbeutel und einer gewebten äußeren Polypropylenhülle bestehen, zum Durchführen des Verfahrens nach einem der Ansprüche 1 bis 8, die Anlage umfassend eine Verdichtungseinheit von mindestens einem Big-Bag, stromabwärtig derer ein Zuführungsband angeordnet ist, das die Zerkleinerungseinheit mit (einem) verdichteten Big-Bag(s) speist, umfassend Mittel zum Schneiden des mindestens einen Big-Bags in ein rohes Zerkleinerungsgut, das einerseits aus Polyethylenstreifen und andererseits aus Polypropylenfragmenten besteht, die Anlage ferner umfassend Einspeisemittel einer Beladevorrichtung für rohes Zerkleinerungsgut, umfassend Mittel für eine Kalibrierung und Leitung des Einlassdurchsatzes des Zerkleinerungsguts in eine Trennungseinheit, umfassend mindestens einen Rüttler, der geeignet ist, einen ersten Anteil von Polypropylenfragmenten von einem zweiten Anteil von Polyethylenstreifen zu trennen, erste Mittel zum Befördern des zweiten Anteils von dem Rüttler zu einer zweiten Zerkleinerungseinheit, zweite Mittel zum Befördern des zerkleinerten zweiten Anteils von der zweiten Zerkleinerungseinheit zu einer Trennungs- und Reinigungseinheit, und vierte Mittel zum Befördern des ersten Anteils von Fragmenten direkt von dem Rüttler zu der Trennungs- und Reinigungseinheit, stromabwärtig derer erste Extrusionsmittel, die mit dem gereinigten ersten Anteil von Polypropylenfragmenten gespeist werden, und zweite Extrusionsmittel platziert sind, die mit dem gereinigten zweiten Anteil von zerkleinerten Polyethylenstreifen gespeist werden.

10. Anlage zum Zerkleinern und Recyceln von gebrauchten Big-Bags nach Anspruch 9, **dadurch gekennzeichnet, dass** der Rüttler in seinem unteren Teil eine Schürze umfasst, die aus einer Vielzahl von festen, parallelen Gittern oder Stangen zusammengesetzt ist, wobei zwei benachbarte Gitter oder Stäbe um einen Abstand, der zwischen 1 bis 3 cm liegt, voneinander getrennt sind, der Rüttler ferner umfassend in seinem oberen Teil eine Folge einer Vielzahl von gelenkigen Stangen, die Spitzen enthalten, wobei die Stangen in eine alternierende und stoßartige Drehbewegung von 20 bis 90° angetrieben werden.

11. Anlage zum Zerkleinern und Recyceln von gebrauchten Big-Bags nach Anspruch 9 oder 10, **dadurch gekennzeichnet, dass** die Schneidemittel der Zerkleinerungseinheit aus einem Rotor mit mehreren Messern bestehen.

12. Anlage zum Zerkleinern und Recyceln von gebrauchten Big-Bags nach Anspruch 9 oder 10, **dadurch gekennzeichnet, dass** die Schneidmittel der Zerkleinerungseinheit aus einem Guillotinenschneider bestehen.

## Claims

1. Method for shredding and recycling used big bags consisting of a continuous inner polyethylene bag and an outer woven polypropylene envelope, comprising at least the following steps in the following order:
- at least one big bag is compacted to a thickness of less than 20 cm;
- said at least one compacted big bag is transported to a shredding unit, and
- said at least one compacted big bag is shredded at a shredding unit, the transportation speed of said compacted big bag to the shredding unit and the cutting frequency of the latter being such that between 100 and 1000 cuts/m are applied to said compacted big bag(s), so as to obtain, on the one hand, polyethylene strips from the inner bag, the strips having a width of between 1 and 10 mm and a length of up to 1000 mm, and, on the other hand, fragments of the outer polypropylene envelope in the form of partially unwoven pieces and filaments having a width of 1 to 2 mm and a length of up to 500 mm;
- said polyethylene strips are separated from the polypropylene fragments by shaking and a first fraction of polypropylene fragments and a second fraction of polyethylene strips are obtained, the latter being treated by performing a second polypropylene strip shredding process;
- said two fractions are cleaned by performing, on each of the fractions:
∘ at least one aeraulic separation;
∘ dedusting;
∘ washing with water;
- a first extruder is supplied with said first cleaned fraction of polypropylene fragments in order to obtain polypropylene granules and a second extruder is supplied with said second cleaned fraction of shredded polyethylene strips in order to obtain polyethylene granules.

2. Method for shredding and recycling used big bags according to claim 1, **characterized in that** between 200 and 500 cuts/m are applied to the compacted big bag.

3. Method for shredding and recycling used big bags according to claim 1, **characterized in that** said at least one compacted big bag is transported to the shredding unit by means of a transportation belt, at a transportation speed of between 14.4 m/min and 144 m/min, and **in that** said shredding unit at which the shredding is performed consists of a multi-blade rotor, the cutting frequency of which is equal to 240 cuts per second.

4. Method for shredding and recycling used big bags according to claim 3, **characterized in that** said at least one compacted big bag is transported to the shredding unit at a transportation speed of between 28.8 and 72 m/min.

5. Method for shredding and recycling used big bags according to claim 1, **characterized in that** said at least one compacted big bag is transported to the shredding unit by means of a transportation belt, at a transportation speed of between 0.25 m/min and 2.5 m/min, and **in that** said shredding unit at which the shredding is performed consists of a guillotine cutter, the cutting frequency of which is equal to 250 cuts per minute.

6. Method for shredding and recycling used big bags according to claim 5, **characterized in that** said at least one compacted big bag is transported to the shredding unit at a transportation speed of between 0.5 and 1.25 m/min.

7. Method for recycling used big bags according to any of claims 1 to 6, **characterized in that** said at least one big bag is compacted to a thickness of between 3 and 5 cm.

8. Method for recycling used big bags according to any of claims 1 to 7, **characterized in that,** during the step of cleaning said two fractions, the following steps are performed:
- on each of said two fractions, a first aeraulic separation capable of enabling the extraction of the heaviest contaminants, in particular metal, wood, paper and mineral particles;
- on the second fraction containing the strips of PE, a second aeraulic separation capable of enabling the elimination of the PP and lowering the proportion of said PP within said second fraction to a content of less than 1%.

9. Installation for shredding and recycling used big bags consisting of a continuous inner polyethylene bag and an outer woven polypropylene envelope, for implementing the method according to any of claims 1 to 8, said installation comprising a unit for compacting at least one big bag, downstream of which a transportation belt is arranged which supplies said compacted big bag(s) to a shredding unit comprising means for cutting said at least one big bag into a shredded raw material consisting of polyethylene strips and polypropylene fragments, said installation further comprising means for supplying the shredded material to a loader comprising means for calibrating and managing the inlet flow rate of said shredded raw material in a separation unit comprising at least one shaker capable of separating a first fraction of polypropylene fragments from a second fraction of polyethylene strips, first means for transporting said second fraction from the shaker to a second shredding unit, second means for transporting said second shredded fraction from said second shredding unit to a separation and cleaning unit, and fourth means for transporting said first fraction of fragments directly from said shaker to said separation and cleaning unit, downstream of which first extrusion means supplied with said first cleaned fraction of polypropylene fragments and second extrusion means supplied with said second cleaned fraction of shredded polyethylene strips are placed.

10. Installation for shredding and recycling used big bags according to claim 9, **characterized in that** said shaker comprises, in its lower part, a shutter composed of a plurality of fixed grilles or parallel bars, two grilles or two adjacent bars being separated by a distance of between 1 and 3 cm, said shaker further comprising, in its upper part, a succession of a plurality of articulated rods containing points, which rods are driven by an alternating and irregular rotational movement of 20 to 90°.

11. Installation for shredding and recycling used big bags according to claim 9 or claim 10, **characterized in that** the cutting means of the shredding unit consist of a multi-blade rotor.

12. Installation for shredding and recycling used big bags according to claim 9 or claim 10, **characterized in that** the cutting means of the shredding unit consist of a guillotine cutter.
